# EUROPEAN PATENT APPLICATION

(11) **EP 3 284 900 A1**
(43) Date of publication of application: **21.02.2018**
(21) Application number: 16306068.4
(22) Date of filing: 19.08.2016
(51) Int. Cl.: E21B 12/02

(54) **OPTIMIZED REPAIR OF A DRILL BIT**

(71) Applicant: VAREL EUROPE (Société par Actions Simplifiée), 64000 Pau (FR)
(72) Inventor: PELFRENE, Gilles, 77300 FONTAINEBLEAU (FR); THER, Olivier, 75012 PARIS (FR)
(74) Representative: Flodman, Anna

(57) **Abstract**

A method for repairing a drill bit includes: scanning the drill bit after manufacture thereof; comparing the scan to a design model of the drill bit to recognize one or more features of the drill bit, thereby generating a first model of the as-built drill bit; scanning the drill bit after drilling with the drill bit; comparing the scan of the used drill bit to the first model to recognize the features, thereby generating a second model of the used drill bit; simulating a plurality of repair strategies using the first and second models; and selecting one of the repair strategies by comparing results of the simulations.

## Description

### BACKGROUND OF THE DISCLOSURE

### Field of the Disclosure

The present disclosure generally relates to optimized repair of a drill bit.

### Description of the Related Art

US 7,129,633 discloses manufacturing tools having a base and a working surface, such as trim steels, flange steels and die inserts, formed by fabricating or casting a substrate out of a relatively ductile, low wear-resistant metal and forming the working surfaces such as cutting edges, flanging surfaces, die surfaces and die inserts by depositing layers of relatively hard, wear-resistant materials to the substrate by closed-loop direct-metal deposition or laser cladding. A multi-axis numerically controlled robot may be used to position and move a beam and deposition material over large substrates in forming such tooling.

US 8,003,914 discloses an industrial robot having a base for installation, a first arm, a second arm, a third arm, a wire feeder, a welding torch, and a torch cable. The first arm rotates with respect to the base. The second arm pivots with respect to the first arm. The third arm pivots with respect to the second arm. The torch cable is coupled to the wire feeder and feeds a welding wire to a welding torch. The wire feeder is provided to the second arm and is rotatable around a rotation axis.

US 8,738,342 discloses methods and systems to improve design, manufacture and performance of oilfield equipment and well tools using three dimensional (3D) scanning technology and one or more feedback loops. Manufacturing processes and techniques associated with a well tool may be evaluated based on comparing "as built" 3D data with a design data file for the well tool. Based on differences between "as built" 3D data and the design data file, one or more changes in associated manufacturing procedures and/or techniques may be made. Computational fluid dynamic applications may be used to simulate fluid flow characteristics of a well tool using associated design data file, "as built" 3D data and/or after use 3D data. The associated design data file, manufacturing procedures and/or procedures for use of the well tool may be modified based on comparing simulated fluid flow data with desired fluid flow characteristics for the well tool.

### SUMMARY OF THE DISCLOSURE

The present disclosure generally relates to optimized repair of a drill bit. In one embodiment, a method for repairing a drill bit includes: scanning the drill bit after manufacture thereof; comparing the scan to a design model of the drill bit to recognize one or more features of the drill bit, thereby generating a first model of the as-built drill bit; scanning the drill bit after drilling with the drill bit; comparing the scan of the used drill bit to the first model to recognize the features, thereby generating a second model of the used drill bit; simulating a plurality of repair strategies using the first and second models; and selecting one of the repair strategies by comparing results of the simulations.

### BRIEF DESCRIPTION OF THE DRAWINGS

So that the manner in which the above recited features of the present disclosure can be understood in detail, a more particular description of the disclosure, briefly summarized above, may be had by reference to embodiments, some of which are illustrated in the appended drawings. It is to be noted, however, that the appended drawings illustrate only typical embodiments of this disclosure and are therefore not to be considered limiting of its scope, for the disclosure may admit to other equally effective embodiments.
Figures 1A and 1 B illustrate manufacture of a drill bit, according to one embodiment of the present invention.
Figure 2 illustrates scanning of the newly manufactured drill bit.
Figure 3 illustrates generation of a digital model of the newly manufactured drill bit from the scanned data.
Figure 4A illustrates drilling a section of a wellbore using the drill bit. Figure 4B illustrates scanning of the drill bit after drilling of the wellbore.
Figure 5 illustrates generation of a digital model of the used drill bit from the scanned data.
Figures 6A and 6B illustrate simulation of different repair strategies and generation of a repair data file based on a selected repair strategy.
Figure 7 illustrates repair of the used drill bit using an automated system and the repair data file.

### DETAILED DESCRIPTION

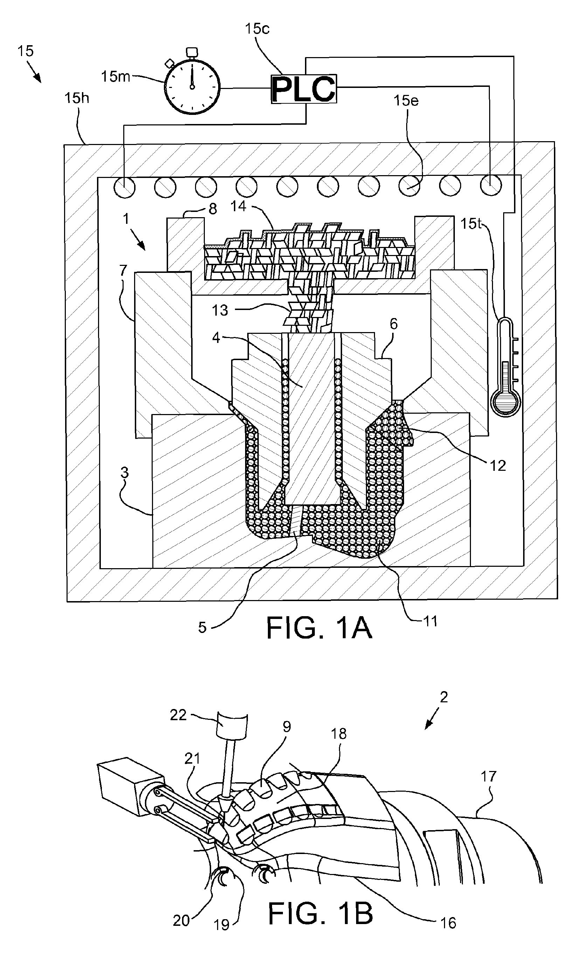

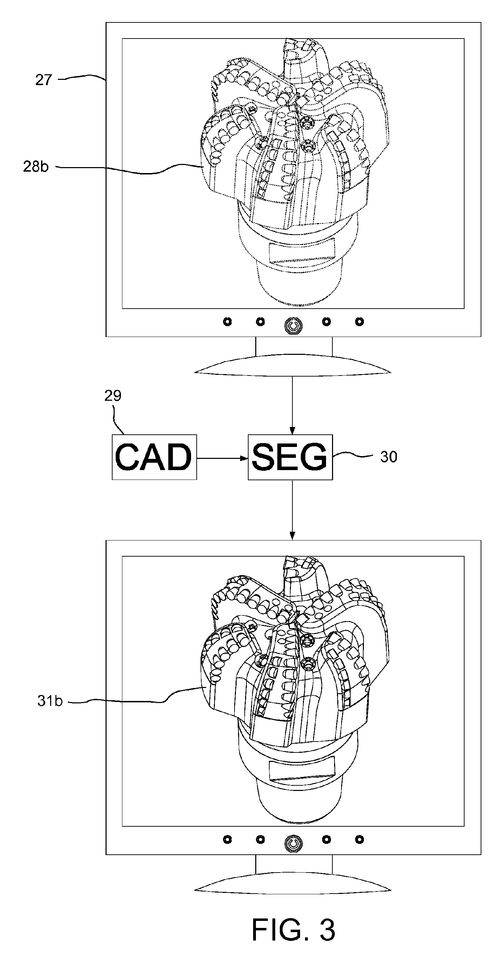

Figures 1A and 1B illustrate manufacture of a drill bit 2, according to one embodiment of the present invention. The drill bit 2 may be a fixed cutter drill bit. A casting assembly 1 may include a thick-walled mold 3, one or more displacements, such as a stalk 4 and one or more port displacements 5, a funnel 7, and a binder pot 8. Each of the mold 3, the displacements 4, 5, the funnel 7, and the binder pot 8 may be made from a refractory material. The mold 3 may be fabricated with a precise inner surface forming a mold chamber using a CAD design model 29 (Figure 3). The precise inner surface may have a shape that is a negative of what will become the facial features of the drill bit 2. The funnel 7 may rest atop the mold 3 and may be connected thereto, such as by a lap joint.

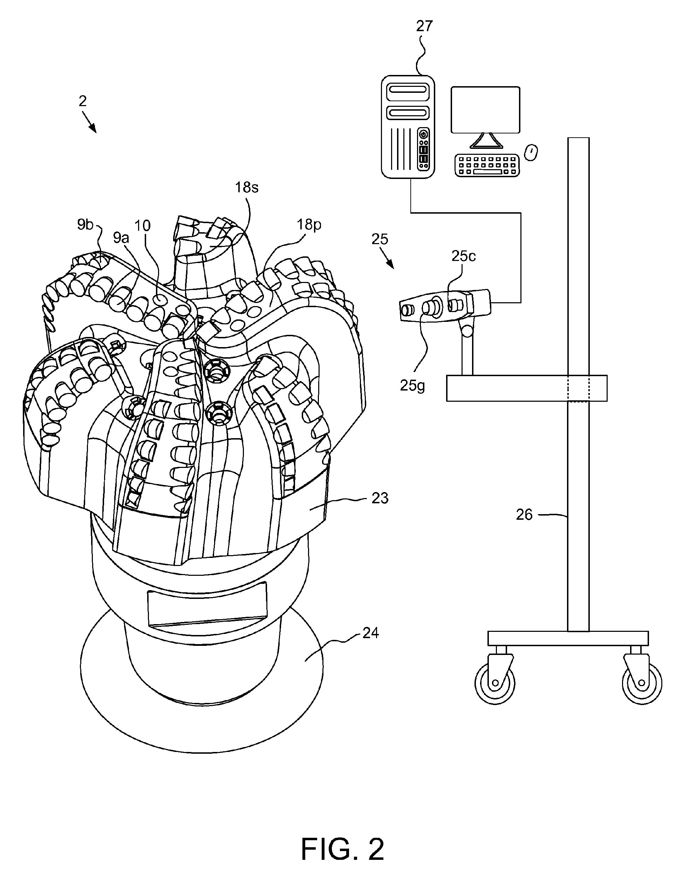

The displacements 4, 5 may be placed within the chamber of the mold 3. The port displacements 5 may be positioned adjacent to a bottom of the mold chamber. The stalk 4 may be positioned within the center of the mold chamber adjacent to a top of the nozzle displacements 5. The stalk 4 may be removed after infiltration to form a bore and plenum of the drill bit 2. The port displacements 5 may be removed after infiltration to form respective ports 19 (Figure 1B) of the drill bit 2. The casting assembly 1 may further include a plurality of cutter displacements (not shown) disposed adjacent to the bottom of the mold chamber and the cutter displacements may be removed after infiltration to form pockets in blades 18 of the drill bit 2 for receiving respective cutters 9 (Figure 1B). The casting assembly 1 may further include a plurality of stud displacements (not shown) disposed adjacent to the bottom of the mold chamber and the stud displacements may be removed after infiltration to form pits in the blades of the drill bit 2 for receiving respective studs 10 (Figure 2).

Once the displacements 4, 5 have been placed, a blank 6 may be placed within the casting assembly 1. The blank 6 may be tubular and may be metallic, such as being made from steel. The blank 6 may be centrally suspended within the thick-walled mold 3 around the stalk 4 so that a bottom of the blank is adjacent to a bottom of the stalk. Once the displacements 4, 5 and the blank 6 have been positioned within the thick-walled mold 3, body powder 11, may be loaded into the thick-walled mold 3 to fill most of the mold chamber. The loading may include pouring of the body powder 11 into the mold 3 while compacting thereof, such as by vibrating the mold. The body powder 11 may be a ceramic, a cermet, or a mixture of a ceramic and a cermet. The ceramic may be a carbide, such as tungsten carbide, and may be cast and/or macrocrystalline. The cermet may include a carbide, such as tungsten carbide, cemented by a metal or alloy, such as cobalt.

Once loading of the body powder 11 has finished, shoulder powder 12 may be loaded into the mold 3 onto a top of the body powder 11 to fill the remaining mold chamber. The shoulder powder 12 may be a metal or alloy, such as the metal component of the ceramic of the body powder 11. For example, if the body powder is tungsten carbide ceramic and/or tungsten carbide-cobalt cermet, then the shoulder powder 12 would be tungsten.

Once loading of the shoulder powder 12 has finished, the binder pot 8 may be rested atop the funnel 7 and may be connected thereto, such as by a lap joint. The binder pot 8 may have a cavity formed therein and a sprue formed through a bottom thereof providing communication between the cavity and the funnel chamber. Binder 13 may then be placed into the cavity and through the sprue of the binder pot 8. The binder 13 may be in the form of pellets or chunks. The binder 13 may be an alloy, such as a copper based alloy. Once the binder 13 has been placed into the binder pot 8, flux 14 may be applied to the binder for protection of the binder from oxidation during infiltration.

The furnace 15 may include a housing 15h, a heating element 15e, a controller, such as programmable logic controller (PLC) 15c, a temperature sensor 15t, and a power supply (not shown). The furnace 15 may be preheated to an infiltration temperature. The blank 6, the powders 11, 12, and the binder 13 may be inserted into the furnace 15 and kept therein for an infiltration time 15m. As the casting assembly 1 is heated by the furnace, the binder 13 may melt and flow into the powders 11, 12 through the sprue of the binder pot 8. The molten binder may infiltrate powders 11, 12 to fill interparticle spaces therein. A sufficient excess amount of binder 13 may have been loaded into the binder pot 8 such that the molten binder fills a substantial portion of the funnel volume, thereby creating pressure to drive the molten binder into the powders 11, 12.

Once the binder 13 has infiltrated the powders 11, 12, the casting assembly 1 may be controllably cooled, such as by remaining in the furnace 15 with the heating element 15e shut off. Upon cooling, the binder 13 may solidify and cement the particles of the powders 11, 12 together into a coherent matrix body 16. The binder 13 may also bond the body 16 to the blank 6. Once cooled, the casting assembly 1 may be removed from the furnace 15. The mold 3, funnel 7, and binder pot 8 may then be broken away from the body 16. A thread may be formed in an inner surface of the upper portion of the blank 6 and a threaded tubular extension screwed therein, thereby forming the shank 17. The threaded connection between the extension and the blank 6 may be secured by a weld.

Once the extension has been screwed into the blank 6, cutters 9 may be mounted in the pockets of the blades 18. Each cutter 9 may be held within the respective pocket during the brazing operation. Once the cutter 9 has been delivered to the respective pocket, a brazing material 21 may be applied to the respective pocket using an applicator 22. Once the brazing material 21 has been applied to the pocket, a heater (not shown) may be operated to melt the brazing material. Cooling and solidification of the brazing material 21 may mount the cutter 9 to the respective blade 18. The brazing operation may then be repeated until all of the cutters 9 have been mounted to the respective blades 18. The brazing operation may also be repeated for mounting the studs 10 to the respective blades 18. Once the cutters 9 have been attached to the respective blades 18, a nozzle 20 may be inserted into the each port 19 and mounted to the bit body 16, such as by screwing the nozzle therein.

Alternatively, the bit body 16 may be metallic, such as being made from steel, and may be hardfaced. The metallic bit body may be connected to a modified shank by threaded couplings and then secured by a weld or the metallic bit body may be monoblock having an integral body and shank. The metallic bit body may be manufactured by milling stock and then hardfacing.

Figure 2 illustrates scanning of the newly manufactured drill bit 2. The drill bit 2 may include the bit body 16, the shank 17, a cutting face, and a gage section. The cutting face may include one or more (three shown) primary blades 18p, one or more (three shown) secondary blades 18s, fluid courses formed between the blades, the cutters 9, and the studs 10. The cutting face may have one or more sections, such as an inner cone, an outer shoulder, and an intermediate nose between the cone and the shoulder. The blades 18p,s may be disposed around the cutting face and each blade may be formed during molding of the bit body 2 and may protrude from the bit body. The primary blades 18p may each extend from a center of the cutting face, across the cone and nose sections, along the shoulder section, and to the gage section. The secondary blades 18s may each extend from a periphery of the cone section, across the nose section, along the shoulder section, and to the gage section. Each blade 18 may extend generally radially across the cone (primary only) and nose sections with a slight spiral curvature and along the shoulder section generally longitudinally with a slight helical curvature. Each blade 18 may be made from the same material as the bit body 2.

Alternatively, the blades 18 may be radially straight (no spiral curvature).

The cutters 9 may include a set of leading cutters 9a for each blade 18 and a set of backup cutters 9b for each blade. The leading cutters 9a may be mounted in pockets formed along leading edges of the blades 18, such as by brazing. The backup cutters 9b may be mounted in pockets formed along of portions of the blades 18 in the shoulder section, such as by brazing. The backup cutters 9b may extend into portions of the blades 18 in the nose section. Each backup cutter 9b may be aligned with or slightly offset from a respective leading cutter 9a. Each cutter 9 may be a shear cutter and may include a superhard cutting table, such as polycrystalline diamond, attached to a hard substrate, such as a cermet, thereby forming a compact, such as a polycrystalline diamond compact (PDC). The cermet may be a carbide cemented by a Group VIIIB metal.

One or more (pair shown) of the studs 10 may be mounted to each primary blade 18p in pockets formed in a bottom of a portion thereof in the cone section, such as by brazing. The studs 10 may each be in a backup position relative to a respective leading cutter 9a and may be aligned with or slightly offset from the respective leading cutter.

Alternatively, the studs 10 may be mounted in one or more sections of the primary blades 18p in addition to or instead of the cone section, such as the nose section and/or shoulder section, the studs may be mounted in any section of the secondary blades 18s, and/or the studs may be mounted to the gage pads 23.

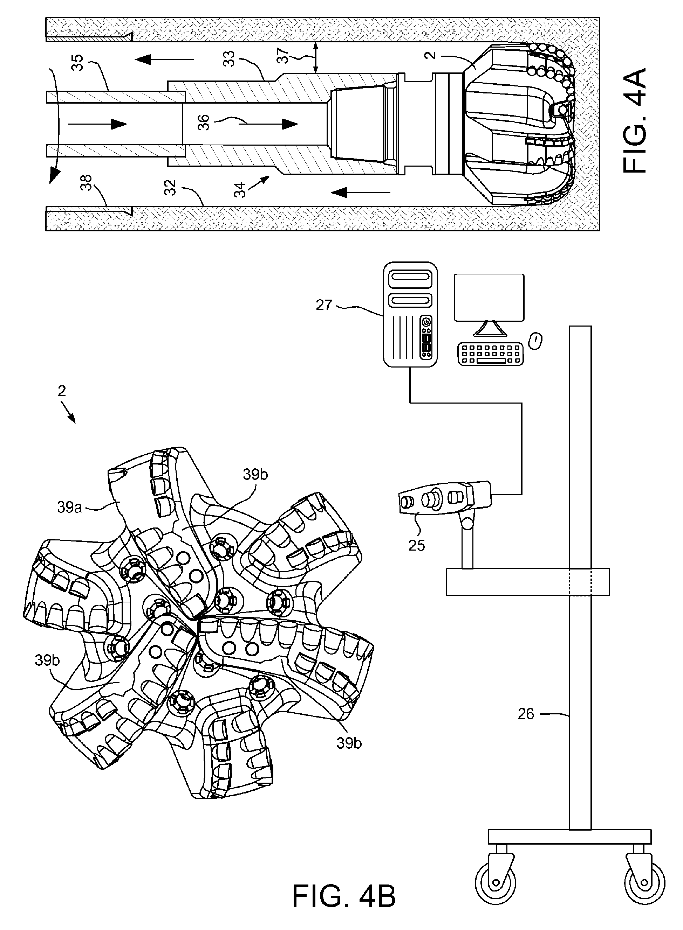

One or more (nine shown) ports 19 may be formed in the bit body 16 and each port may extend from the plenum and through the bottom of the bit body to discharge drilling fluid 36 (Figure 4A) along the fluid courses. Each nozzle 20 may be disposed in each port 19 and fastened to the bit body 2, such as by a threaded connection. The ports 19 may include an inner set of one or more (three shown) ports disposed adjacent to the center of the cutting face and an outer set of one or more (six shown) ports disposed at the periphery of the cone section.

The gage section may include a plurality of gage pads 23 and junk slots formed between the gage pads. The junk slots may be in fluid communication with the fluid courses formed between the blades 18. The gage pads 23 may be disposed around the gage section and each pad may be formed during molding of the bit body 16 and may protrude from the outer portion of the bit body. Each gage pad 23 may be made from the same material as the bit body 16 and each gage pad may be formed integrally with a respective blade 18.

The drill bit 2 may be placed on a turntable 24. Positioning targets (not shown), such as self-adhesive dots, may be applied to surfaces of the cutting face and gage section of the drill bit 2. A three-dimensional (3D) scanner 25 may be mounted to an adjustable stand 26. The 3D scanner 25 may include a central electric lamp 25g straddled by a pair of cameras 25c and a microcontroller (not shown). The lamp 25g may emit a structured blue light (not shown) onto the drill bit 2 and the cameras may measure distortions of the light from surface geometry of the drill bit 2 and the altered perspective of the cameras 25c relative to the lamp. The microcontroller may triangulate the measurements from the cameras 25c to generate a 3D point cloud 28b (Figure 3). The 3D scanner 25 may be connected to a computer 27 via a data cable. The turntable 24 may be operated to rotate the drill bit 2 while the 3D scanner 25 remains stationary. The 3D scanner 25 may be operated while the turntable 24 rotates the drill bit 2 until the scanner has been exposed to the entire cutting face and gage section thereof.

Alternatively, the 3D scanner 25 may have a laser instead of the electric lamp 25g. Alternatively, an anti-reflective coating may also be applied to the drill bit 2 before scanning.

Figure 3 illustrates generation of a digital model 31 b of the newly manufactured drill bit 2 from the scanned data. As the drill bit 2 is being scanned, the computer 27 may receive the 3D point cloud 28b from the microcontroller of the 3D scanner 25. The computer 27 may then process the 3D point cloud 28b to generate a mesh image (not shown) of the drill bit 2. The computer 27 may then compare the mesh image to the CAD design model 29 for recognition of one or more features (aka segmentation 30), such as the blades 18, cutters 9, studs 10, pockets, ports 19, nozzles 20, and gage pads 23, thereby generating a 3D digital model 31 b of the as-built drill bit 2. Recognition of each cutter 9 may include distinguishing between the cutting table and substrate thereof.

Alternatively, the gage pads 23 may include protectors and/or trimmers and these may be recognized during segmentation 30. Additionally, the model 31 b may be used for quality control of the manufacturing process.

Figure 4A illustrates drilling a section of a wellbore 32 using the drill bit 2. The drill bit 2 may be assembled with one or more drill collars 33, such as by threaded couplings, thereby forming a bottomhole assembly (BHA) 34. The BHA 34 may be connected to a bottom of a pipe string 35, such as drill pipe or coiled tubing, thereby forming a drill string. The pipe string 35 may be used to deploy the BHA 34 into the wellbore 32. The drill bit 2 may be rotated, such as by rotation of the drill string from a rig (not shown) and/or by a drilling motor (not shown) of the BHA 34, while drilling fluid 36, such as mud, may be pumped down the drill string. A portion of the weight of the drill string may be set on the drill bit 2. The drilling fluid 36 may be discharged by the drill bit 2 and carry cuttings up an annulus 37 formed between the drill string and the wellbore 32 and/or between the drill string and a casing string and/or liner string 38.

Figure 4B illustrates scanning of the drill bit 2 after drilling of the wellbore 32. The drill bit 2 may sustain damage due to abrasion and/or erosion during drilling of the wellbore 32. The damage may include a first worn region 39a at the shoulder section of one of the primary blades 18p and a second worn region 39b along a trailing edge of each primary blade at the nose section thereof. The first worn region 39a may include one or more (three shown) missing cutters due to removal of walls of the respective pockets.

The used drill bit 2 may again be placed on the turntable 24. Positioning targets may again be applied to the surfaces of the cutting face and gage section of the drill bit 2. The 3D scanner 25 may again be operated while the turntable 24 rotates the used drill bit 2 until the scanner has been exposed to the entire cutting face and gage section thereof.

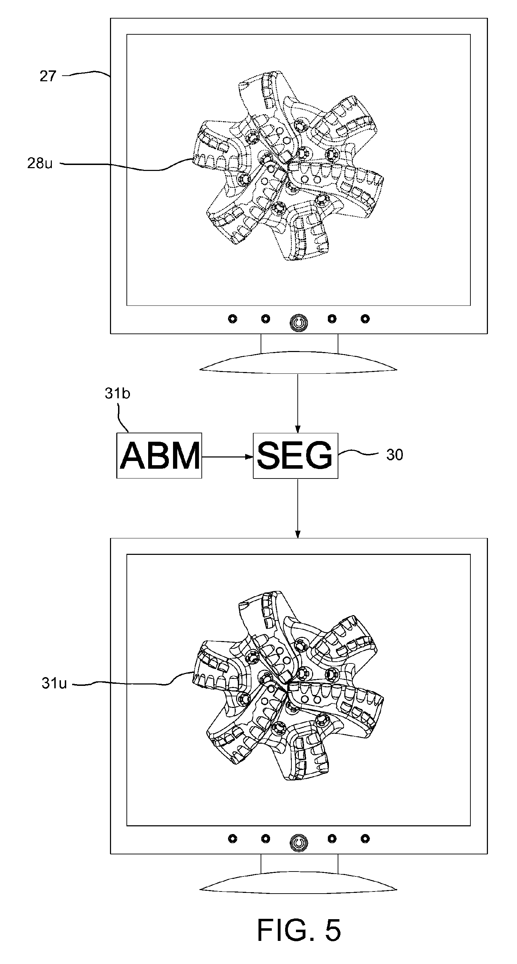

Figure 5 illustrates generation of a digital model 31 u of the used drill bit 2 from the scanned data. As the used drill bit 2 is being scanned, the computer 27 may receive the 3D point cloud 28u from the microcontroller of the 3D scanner 25. The computer 27 may then process the 3D point cloud 28u to generate the mesh image (not shown) of the used drill bit 2. The computer 27 may then compare the mesh image to the as-built model 31 b for segmentation 30, thereby generating a 3D digital model 31 u of the used drill bit 2. The computer 27 may also identify the worn regions 39a,b.

Alternatively, one or more of the cutters 9 may have worn regions and the computer 27 may identify them. Additionally, the computer 27 may distinguish between damage to the cutting tables of the cutters 9 and damage to the substrates thereof. Additionally, the computer 27 may generate a dull grade report using the model 31 u. Additionally, the model 31 u may be used for feedback to improve the design of the drill bit 2.

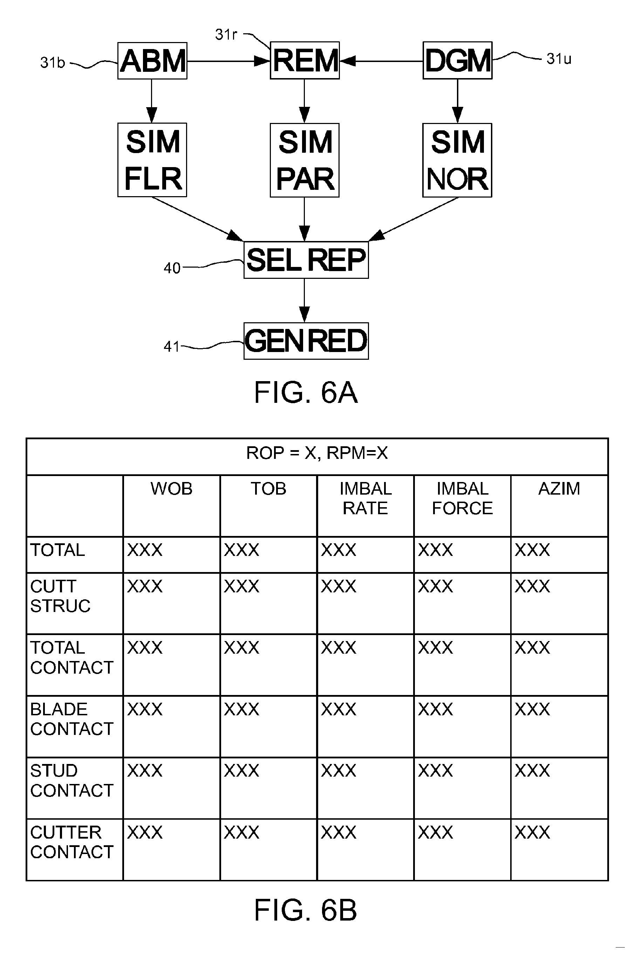

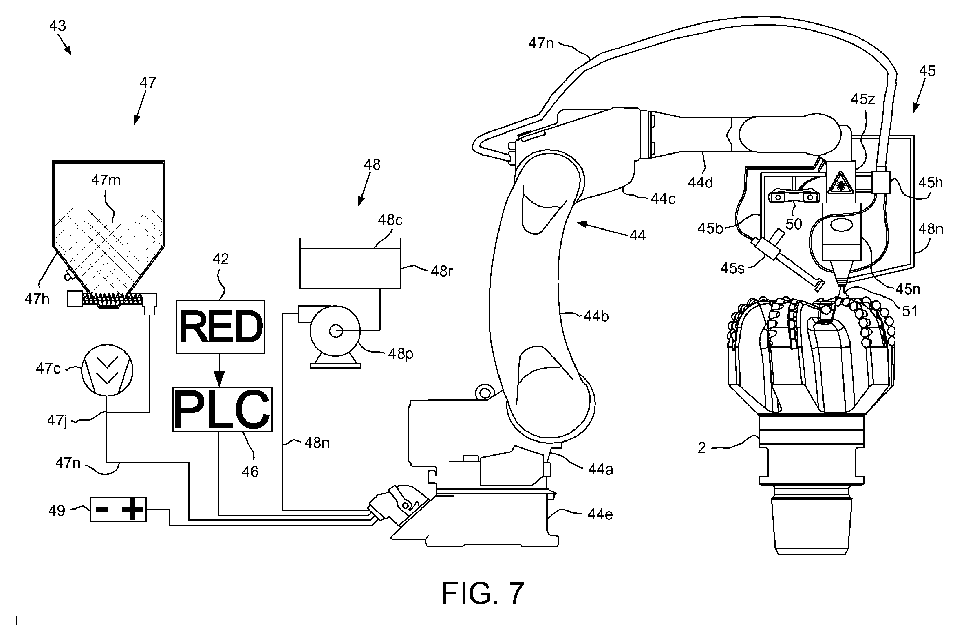

Figures 6A and 6B illustrate simulation of different repair strategies and generation 41 of a repair data file 42 (Figure 7) based on a selected repair strategy. The digital model 31 u of the used drill bit 2 may be analyzed by a technician or engineer to determine one or more repair strategies, such as full repair (FLR) of the drill bit 2, partial repair (PAR) of the drill bit, and no repair (NOR) of the drill bit.

A partial repair model (REM) 31r may be created using the model 31 b of the as-built drill bit 2 and the model 31 u of the used drill bit. The partial repair model 31 r and strategy may include restoration of the first worn region 39a (restoration of pockets and missing cutters from the primary blade 18r) while leaving the second worn region 39b undisturbed. The rationale for leaving the second worn region 39b intact is that the wear may be due to natural optimization which could result in superior performance as compared to the as-built condition of the drill bit 2.

Drilling of a hypothetical wellbore may then be simulated (SIM) for each 3D digital model 31b,r,u to determine reaction forces (WOB) and (IMBAL FORCE) and torques (TOB) exerted on the drill bit 2 in the respective conditions by a hypothetical formation adjacent to the wellbore. The reaction forces may be divided into two directions: parallel to the longitudinal axis of the drill bit 2 (WOB) and transverse to the longitudinal axis of the drill bit (IMBAL FORCE). A direction (AZIM) of the vector of the transverse forces may also be determined. Rates of the transverse forces may also be determined by dividing each transverse force by the respective longitudinal force. The engineer or technician may supply parameters, such as rate-of-penetration (ROP) and angular speed (RPM) of the drill bit 2, and geology of the formation, and the parameters may be identical for each simulation. Each simulation may generate two categories of reaction forces and torques: cutting structure which represents the contribution of all cutting tables of the cutters 9 and contacts which represents the contribution of all bearing faces. The contacts category may be sub-divided into individual contributions from the blades 18p,s, studs 10, and substrates of the cutters 9.

Alternatively, instead of simulating a vertical wellbore as shown, each simulation may include parameters for a deviated wellbore and the results may further include a contact force and torque for the gage pads 23.

The results of the simulations may be compared by focusing on the transverse forces and rates and the repair strategy may be selected 40 by the simulation having the least total transverse force or rate meaning the greatest stability. Once the optimal repair strategy has been selected 40 (assuming that it is either partial or full repair), the partial or full repair may be performed by first generating 41 the repair data file (RED) 42. The repair data file 42 may be generated 41 by subtracting the model 31 u of the used drill bit 2 from the respective model 31 b,r of the selected repair strategy and converting the resulting difference into a computer aided manufacturing (CAM) format.

Figure 7 illustrates repair of the used drill bit 2 using an automated system 43 and the repair data file 42. The automated system 43 may include a robot 44, a deposition head 45, a programmable logic controller 46, a material supply system 47, a cooling system 48, an electrical power supply 49, and a tracker 50. The robot 44 may include a base 44e and one or more arms 44a-d, and an actuator (not shown) for each arm. The base 44e may mount the robot 44 to a floor of a repair facility (not shown). A first arm 44a may be supported from the base 44e and may be rotated relative to the base by a first actuator. A second arm 44b may be pivotally connected to the first arm 44a and articulated relative thereto by a second actuator. A third arm 44c may be pivotally connected to the second arm 44b and articulated relative thereto by a third actuator. A fourth arm 44d may be pivotally connected to the third arm 44c and articulated relative thereto by a fourth actuator. The deposition head 45 may be fastened to an end of the fourth arm 44d distal from the third arm 44c.

The deposition head 45 may include a laser 45z, a nozzle 45n, and a feedback sensor 45s, such as a pyrometer. An upper end of the laser 45z may be fastened to the fourth arm 44d. An upper end of the nozzle 45n may be fastened to a lower end of the laser 45z. A bracket 45b may be fastened to an outer surface of the laser 45z and the feedback sensor 45s may be fastened to the bracket adjacent to a lower end of the nozzle 45n. The tracker 50 may also be fastened to the bracket 45b.

The material supply system 47 may include a compressor 47c, a metering hopper 47h, a delivery flowline 47n, and a transport junction 47j. The metering hopper 47h may be loaded with a mixture 47m of the body powder 11 and the binder 13. A discharge of the metering hopper 47h and a discharge of the compressor 47c may each be connected to a respective inlet of the transport junction 47j. A discharge of the transport junction 47j may be connected to the delivery flowline 47n. The delivery flowline 47n may enter the robot 44 at the base 44e and the robot may have one or more fluid swivels to accommodate routing of the flowline therethrough. The delivery flowline 47n may exit the robot 44 at the end of the third arm 44c and lead to a header 45h supported from an outer surface of the laser 45z. A plurality of feed lines may extend from the header 45h to respective ports of the nozzle 45n for delivery of the powder mixture 47m toward the focal point of the laser 45z.

The cooling system 48 may include a reservoir 48r of coolant 48c, such as water, a pump 48p, and a delivery line 48n. An intake of the pump 48p may be connected to the reservoir 48r and the delivery flowline 48n may be connected to a discharge of the pump. The delivery flowline 48n may enter the robot at the base 44e and the robot 44 may have one or more fluid swivels to accommodate routing of the flowline therethrough. The delivery flowline 48n may exit the robot 44 at the end of the fourth arm 44d and lead to the nozzle 45n for application of the coolant thereto.

The electrical power supply 49 may be in electrical communication with the laser 45z and the arm actuators via a power cable extending through the robot 44. The feedback sensor 45s, tracker 50, and arm actuators may be in electrical communication with the controller 46 via a data cable extending through the robot 44.

The tracker 50 may be an optical tracker operable to identify the positioning targets on surfaces of the used drill bit 2. The repair data file 42 may include coordinates of the positioning targets on the surfaces of the used drill bit 2. The controller 46 may utilize the positioning targets read by the optical tracker for locating the first worn region 39a (and the second region 39b if the full repair strategy was selected).

In operation, the heat generated by the laser 45z may melt the binder 13 in the mixture 47m as the robot 44 moves the deposition head 45 along the first worn region 39a, thereby depositing a layer of material 51 onto the used drill bit 2. Once a first layer of material 51 has been deposited, movement may continue to deposit additional layers onto the first layer until the pockets of the first worn region 39a have been restored. New cutters (not shown) may then be mounted into the restored pockets, such as by brazing.

Additionally, once the repair has been completed, the restored drill bit (not shown) may be scanned in a similar process discussed above for the drill bit 2 in the as-built and used conditions. Scanning of the restored drill bit may be used to verify quality of the repair and as a baseline for subsequent use of the restored drill bit to repeat the repair process.

Advantageously, scanning and simulation of the drill bit 2 in the used condition allows for better assessment of the remaining life of the drill bit instead of merely scrapping the drill bit once it has been used.

Alternatively, the drill bit 2 may be manually repaired. Alternatively, the deposition head 45 may be stationary and the drill bit 2 may be located on a movable platform. Alternatively, a welding torch may be used instead of the deposition head 45, especially if the bit body is metallic. Alternatively, if wear to the cutters 9 has been identified, the repair process may further include de-brazing the worn cutters from the respective pockets, rotating the cutters to present a fresh cutting surface, and re-brazing the cutters into the pockets.

Alternatively, the drill bit 2 may be a roller cone, hybrid, or hammer drill bit instead of a fixed cutter drill bit. Alternatively, the blades 18 may be impregnated with diamond instead of or in addition to having the cutters 9 mounted thereto. Alternatively, a stabilizer or underreamer may be repaired instead of the drill bit 2.

While the foregoing is directed to embodiments of the present disclosure, other and further embodiments of the disclosure may be devised without departing from the basic scope thereof, and the scope of the invention is determined by the claims that follow.

## Claims

1. A method for repairing a drill bit, comprising:
scanning the drill bit after manufacture thereof;
comparing the scan to a design model of the drill bit to recognize one or more features of the drill bit, thereby generating a first model of the as-built drill bit;
scanning the drill bit after drilling with the drill bit;
comparing the scan of the used drill bit to the first model to recognize the features, thereby generating a second model of the used drill bit;
simulating a plurality of repair strategies using the first and second models; and
selecting one of the repair strategies by comparing results of the simulations.

2. The method of claim 1, further comprising repairing the drill bit according to the selected repair strategy.

3. The method of claim 2, wherein:
the method further comprises generating a repair data file using the first and second models; and
the drill bit is repaired using an automated system.

4. The method of claims 2 or 3, wherein the drill bit is repaired by additive manufacturing.

5. The method of any of claims 2 to 4, wherein:
the drill bit is a fixed cutter drill bit, and
the repair comprises:
restoring one or more pockets of the drill bit; and
mounting a cutter into each pocket.

6. The method of any preceding claim, wherein:
the drill bit is a fixed cutter drill bit,
the recognized features comprise cutters and blades, and
the result of each simulation comprises forces and torques for the cutters and blades.

7. The method of claim 6, wherein:
a cutting table and a substrate of each cutter is separately recognized, and
the result of each simulation comprises forces and torques for the cutting tables and the substrates.

8. The method of claims 6 or 7, wherein:
the recognized features further comprise studs and gage pads, and
the result of each simulation further comprises forces and torques for the studs and gage pads.

9. The method of any of claims 6 to 8, wherein:
the forces are longitudinal forces, and
the result of each simulation further comprises imbalance forces for the recognized features.

10. The method of any preceding claim, wherein the repair strategies comprise full repair, partial repair, and no repair.

11. The method of claim 10, wherein the partial repair strategy leaves one or more worn regions of the drill bit undisturbed for determining natural optimization.

12. The method of any of claims 2 to 11, further comprising scanning the drill bit after repairing the drill bit.

13. The method of any preceding claim, further comprising manufacturing the drill bit.

14. The method of any preceding claim, further comprising drilling a section of a wellbore using the drill bit.

15. A drill bit repaired according to the method of any of claims 2 to 14.
